# EUROPÄISCHE PATENTSCHRIFT

(11) **EP 1 145 421 B1**
(45) Veröffentlichungstag und Bekanntmachung des Hinweises auf die Patenterteilung: **24.07.2002**
(21) Anmeldenummer: 00907418.8
(22) Anmeldetag: 05.01.2000
(51) Int. Cl.: H02P 3/10

(54) **NETZBREMSEINRICHTUNG FÜR EIN ELEKTROHANDWERKZEUG**
MAINS BRAKING DEVICE FOR A LINE-POWERED POWER TOOL
DISPOSITIF DE FREINAGE SUR SECTEUR POUR OUTIL ELECTRIQUE

(30) Priorität: 07.01.1999 DE 19900281; 14.07.1999 DE 19932742
(43) Veröffentlichungstag der Anmeldung: 17.10.2001
(73) Patentinhaber: Metabowerke GmbH, 72622 Nürtingen (DE)
(72) Erfinder: ROTTMERHUSEN, Hans Hermann, 25782 Tellingstedt (DE)
(74) Vertreter: Friz, Oliver
(86) Internationale Anmeldenummer: DE0000039
(87) Internationale Veröffentlichungsnummer: WO0041294

(56) Entgegenhaltungen:
- DE-A- 1 588 380
- PATENT ABSTRACTS OF JAPAN vol. 1995, no. 05, 30. Juni 1995 (1995-06-30) & JP 07 046707 A (TOYOTA AUTOM LOOM WORKS LTD), 14. Februar 1995 (1995-02-14)

## Beschreibung

Die Erfindung bezieht sich auf eine Netzbremseinrichtung für ein Elektrohandwerkzeug, gemäß dem Patentanspruch 1.

Netzgebremste Stromwendermotoren sind in unterschiedlichen Auslegungen und Techniken bekannt.

In der DE-PS 15 88 380 wird eine Anordnung zur Gegenstrombremsung eines aus einer Batterie über eine Impulssteuereinrichtung gespeisten Gleichstromreihenschlußmotors mit zwei seine Erregerwicklung umpolenden Wendeschützen beschrieben. Mittels zweier Dioden (D1, D2), die ständig unmittelbar mit je einem Anschluß der Erregerwicklung (E, F) verbunden sind, und mittels eines Steuerglieds, das die Wendeschütze (1, 2) nacheinander in entsprechender Reihenfolge betätigt, soll verhindert werden, daß beim Umschalten des Motors auf Gegenstrombremsung keine Schaltfunken auftreten.
Die Gegenstrombremsung dient vorrangig dazu, den Motor bis zum Stillstand abzubremsen, damit er möglichst schnell in der entgegengesetzten Drehrichtung wieder hochgefahren werden kann.

Für ein Elektrohandwerkzeug (Winkelschleifer, Handkreissäge) mit hoher Leistungsaufnahme ist eine derartige Gegenstrombremsung, so wie sie in der DE-PS 15 88 380 beschrieben ist, nicht geeignet, da für eine sichere Wechselstrombremsung die erforderlichen Einrichtungen fehlen.

DE-AS 12 25 223 beschreibt eine Nutzbremsschaltung für während der Bremsung serienerregte Wechselstrom Reihenschlußfahrmotoren, deren Erregung während der Bremsung umgepolt ist unter Verwendung von Mitteln zur Begrenzung des Bremsstromes und zur Vermeidung von Selbsterregung mit netzfremder Frequenz. Hier wird eine vom Bremsstrom gesteuerte Schaltanordnung wirksam gemacht, die mit jedem Nulldurchgang des Nutzbremsstromes die Stromrichtung der abgeklungenen Halbwelle unterbricht.

Für mit gefährlichen Werkzeugen bestückte Elektrowerkzeuge findet eine derartige Nutzbremsschaltung jedoch keine Anwendung.

DE 23 48 880 B 2 beschreibt einen Waschautomatenantrieb mit einem elektrisch abbremsbaren Reihenschluß-Kommutatormotor, dessen Ankerwicklung während der Bremsung kurzgeschlossen ist. Die Drehzahl des Reihenschlußmotors ist über eine Halbleiterschaltungsanordnung (1) steuerbar, und es ist ein Schalter vorgesehen, durch den im geschlossenen Zustand sowohl die Ankerwicklung (2) kurzgeschlossen als auch die Feldwicklung über die Halbleiterschaltungsanordnung unmittelbar an das speisende Netz angelegt ist, und der Erregerstrom kann mittels der Halbleiterschaltungsanordnung verändert werden.

Auch die in der DE 23 48 880 beschriebene Schaltungsanordnung ist für ein Elektrohandwerkzeug nicht geeignet, da hiermit nicht die bei Elektrohandwerkzeugen gewünschte sichere Reihenschlußbremsung durchführbar ist.

Der Erfindung liegt die Aufgabe zugrunde, eine Netzbremseinrichtung für Elektrohandwerkzeuge zu schaffen, womit leistungsstarke standardgemäße Stromwendermotoren sicher durch eine sanfte Schnellbremsung gebremst werden können, um eine solche Netzbremseinrichtung bei einem mit einem gefährlichen Werkzeug bestückten Elektrohandwerkzeug wie Handkreissäge, Winkelschleifer o. dgl. verwenden zu können.

Diese Aufgabe wird durch die Merkmale des Patentanspruchs 1 gelöst.

Weitere Ausgestaltungen der Erfindung sind den Unteransprüchen und der nachfolgenden Beschreibung zu entnehmen.

Die Erfindung ist bei einer Anordnung der eingangs genannten Art darin zu sehen, daß der Elektronik des Elektrohandwerkzeugs zur Freigabe des Netzes für den Bremsbetrieb entsprechende Einrichtungen zugeordnet sind, die eine sichere Erkennung zur Einleitung des Bremsbetriebes bewirken, und daß dem Stromwendermotor des Elektrowerkzeugs eine Drehzahlerfassungseinrichtung zugeordnet ist, die sowohl während des Motorbetriebes als auch während des Bremsbetriebes zur Erkennung des Bremsverlaufs und des Motorstillstandes Anwendung findet, und daß der Betriebsschalter des Elektrohandwerkzeugs zwei Umschaltglieder und ein Netztrennglied beinhaltet, die gleichzeitig über ein Betätigungselement betätigt werden, wobei das Netztrennglied für den Bremszeitverlauf eine automatische mechanische Netztrennverzögerung aufweist, oder das Netz wird nach dem Bremsvorgang durch ein Relais getrennt.

Die Erfindung wird nachstehend anhand der in den Figuren dargestellten Ausführungsbeispielen näher erläutert.

Dabei zeigt:
- Fig. 1: eine Schaltungsanordnung zum netzabhängigen Bremsen eines Stromwendermotors, bei der ein elektronischer Leistungsschalter während des Bremsbetriebes in Reihe mit dem Stromwendermotor geschaltet ist,
- Fig. 2: eine Schaltungsanordnung zum netzabhängigen Bremsen eines Stromwendermotors, bei der ein elektronischer Leistungsschalter sowohl während des Motorbetriebes als auch während des Bremsbetriebes in Reihe mit dem Stromwendermotor geschaltet ist.
- Fig. 3: eine alternative Schaltungsanordnung zum netzabhängigen Bremsen eines Stromwendermotors nach Fig. 2,
- Fig. 4: eine Schaltungsanordnung zum netzabhängigen Bremsen eines Stromwendermotors, bei der zwei elektronische Leistungsschalter parallel geschaltet sind, wobei der eine elektronische Leistungsschalter für den Motorbetrieb und der andere elektronische Leistungsschalter für den Bremsbetrieb bestimmt ist.

Stromwendermotoren ohne Wendepole für mit gefährlichen Werkzeugen bestückte Elektrohandwerkzeuge werden bislang mit Hilfe von Elektronik netzunabhängig mittels einer Kurzschlußschaltung gebremst, hierbei ist eine ausreichende Kommutierung während des Bremsvorganges von der Leistungsstärke des Motors abhängig, je höher die Leistungsaufnahme des Stromwendermotors ist, desto geringer ist eine ausreichende Kommutierung zu erzielen.

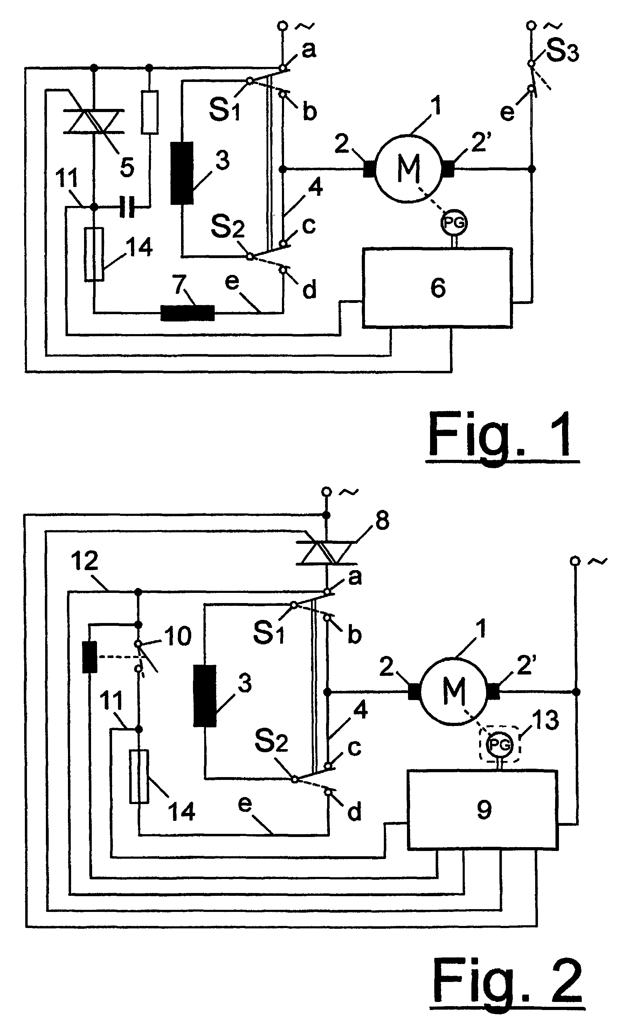

Die Fig. 1 bis 4 zeigen jeweils eine Schaltungsanordnung für einen Stromwendermotor, mit denen eine netzabhängige Bremsung durchführbar ist. Dem Stromwendermotor, bestehend aus einem Anker 1 mit zugeordneten Bürsten 2, 2' und einer Feldwicklung 3, ist ein Betriebsschalter mit zwei Umschaltgliedern S1;S2 und einem Netztrennglied S3 oder ein Relais 10 zugeordnet.
Die Schaltglieder befinden sich jeweils in der Motorbetriebsstellung. Die Umschaltglieder S1, S2 und das Netztrennglied S3 des Betriebsschalters werden gemeinsam über ein Betätigungselement geschaltet. Die Feldwicklung 3 ist jeweils zwischen dem ersten und dem zweiten Umschaltglied S1;S2 angeordnet, wobei auch der Anker 1 zwischen dem ersten und dem zweiten Umschaltglied S1;S2 angeordnet sein kann.

Fig. 1 zeigt im einzelnen eine Schaltungsanordnung, bei der der Motorbetriebskontakt a des ersten Umschaltgliedes S 1 mit einem ersten Netzanschluß und der Bremsbetriebskontakt b des ersten Umschaltgliedes S1 über eine Brücke 4 mit dem Motorbetriebskontakt c des zweiten Umschaltgliedes S2 und mit dem ersten Anschluß des Ankers 1 verbunden ist, und der Bremsbetriebskontakt d des zweiten Umschaltgliedes S2 ist über einen elektronischen Leistungsschalter 5 (Triac) mit dem Motorbetriebskontakt a des ersten Umschaltgliedes S1 und mit dem ersten Netzanschluß verbunden. Der zweite Anschluß des Ankers 1 ist mit dem Motorbetriebskontakt e des Netztrenngliedes S3 verbunden, wobei das Netztrennglied S3 mit dem zweiten Netzanschluß verbunden ist.
Wird der Stromwendermotor ausgeschaltet, so erfolgt die Umschaltung vom Motorbetrieb in den Bremsbetrieb, hierbei wird die Feldwicklung 3 oder der Anker 1 über die Schaltglieder S1;S2 umgepolt, wobei der Triac 5 in Reihe mit dem Stromwendermotor geschaltet ist. Dem Triac 5 ist eine Steuerelektronik 6 zur Beeinflussung des aus dem Netz entnommenen Bremsstroms zugeordnet.
Für den Bremsvorgang ist die Steuerelektronik 6 so ausgelegt, daß die Abbremsung des Motors sanft eingeleitet wird und sich bis zum Ende des Bremsvorganges kontinuierlich verstärkt, wodurch eine sanfte Schnellbremsung des Stromwendermotors bei einer ausreichenden Kommutierung erzielt wird. Für den Bremsvorgang kann die Steuerelektronik 6 eine Einrichtung zur Erfassung des Motorstillstandes oder ein Zeitglied für die Bremszeit beinhalten. Nach Beendigung des Bremsvorganges wird der Stromwendermotor durch das Netztrennglied S3 vom Netz getrennt. Das Netztrennglied S3 kann über eine mechanische Einrichtung oder über eine elektronische Einrichtung, die in Verbindung mit der Steuerelektronik 6 steht, verzögert geschaltet werden. Die verzögerte Netztrennung dauert solange an bis der Motor zum Stillstand gekommen ist. Sobald der Motor steht ist der Triac 5 gesperrt, wodurch der Stromfluß über dem Motor unterbrochen ist, und unmittelbar danach wird der Motor durch das Netztrennglied S3 vom Netz getrennt.
Der Triac 5 kann während des Bremsbetriebes von der dem Triac zugeordneten Steuerelektronik 6 einerseits so angesteuert werden, daß am Anfang des Bremsverlaufs jeweils eine oder mehrere angeschnittene oder nicht angeschnittene Halbwellen des Netzes hintereinander durchgesteuert und danach jeweils eine Anzahl von Halbwellen nicht durchgesteuert werden, und im weiteren Verlauf des Bremsvorganges werden die nicht durchgesteuerten Halbwellen kontinuierlich verringert.
Andererseits kann der Triac 5 während des Bremsvorganges derart angesteuert werden, daß am Anfang des Bremsverlaufs die Halbwellen einen hohen Anschnitt aufweisen, und im weiteren Verlauf des Bremsvorganges der Anschnitt der Halbwellen in Abhängigkeit vom geringsten zu erzielenden Bürstenfeuer kontinuierlich bis zum Ende des Bremsvorganges abnimmt, wobei der Bremsstrom am Anfang gering ist, dann ansteigt und über eine gewisse Zeit konstant bleibt und zum Ende der Bremszeit weiter ansteigt, hierbei ist die Höhe des Bremsstroms während des Bremsverlaufs abhängig vom geringsten zu erzielenden Bürstenfeuer am Kollektor des Stromwendermotors.
Der Triac 5 ist vorzugsweise mit einer Speicherdrossel 7 in Reihe geschaltet, womit ein zu steiler Anstieg der Spannung am Triac 5 und somit eine Überkopfzündung des Triacs während des Umschaltens vom Motorbetrieb in den Bremsbetrieb verhindert wird.

Bei der Schaltungsanordnung der Fig. 1 wird ein elektronischer Leistungsschalter (Triac 5) lediglich während des Bremsvorganges aktiv.
Fig. 2 zeigt eine Schaltungsanordnung, bei der ein elektronischer Leistungsschalter, ein Triac 8, sowohl während des Motorbetriebes als auch während des Bremsbetriebes zum Einsatz kommt. Der Triac 8 liegt hier ständig in Reihe mit dem Stromwendermotor. Dem Triac 8 ist eine Steuerelektronik 9 zugeordnet, die sowohl für die Drehzahlsteuerung des Motors als auch für die Steuerung des Bremsverlaufs bei einer netzabhängigen Bremsung des Motors bestimmt ist. Die Schaltglieder S1;S2 der Schaltungsanordnung befinden sich in der Motorbetriebsstellung. Wird der Stromwendermotor abgeschaltet, so werden die Umschaltglieder S1;S2 betätigt und die Feldwicklung 3 umgepolt, wodurch eine netzabhängige Bremsung des Motors eingeleitet wird. Die Umschaltung vom Motorbetrieb in den Bremsbetrieb muß von der Steuerelektronik 9 sicher erkannt werden. Wird der Triac 8 nicht rechtzeitig mit dem Bremsprogramm der Steuerelektronik 9 angesteuert, so wird das Netz unmittelbar über den Motor kurzgeschlossen, da in der Bremsschaltung (Generatorfunktion) unbegrenzte Ströme fließen können.
Zur sicheren Erkennung der Einleitung des Bremsbetriebes ist daher in der Brücke e, die dem Bremsbetriebskontakt d des zweiten Umschaltgliedes S2 mit dem Motorbetriebskontakt a des ersten Umschaltgliedes S1 verbindet, ein Relais 10 angeordnet, das mit der Steuerelektronik 9 in Verbindung steht, und zur Freigabe des Netzes während des Bremsbetriebes dient.
Damit die Steuerelektronik 9 die Umschaltung vom Motorbetrieb in den Bremsbetrieb sicher erkennt, führt eine Leitung 11 von der Steuerelektonik 9 zum Bremsbetriebskontakt d des zweiten Umschaltgliedes S2. Sobald eine Spannung am Bremsbetriebskontakt d anliegt, wird das Bremsbetriebsprogramm der Steuerelektronik 9 aktiviert und das Netz über das Relais 10 freigegeben und der Triac 8 mit dem Bremsprogramm angesteuert. Nach Beendigung des Bremsvorganges ist der Triac 8 gesperrt, und der Stromwendermotor wird über das Relais 10 vom Netz getrennt. Das Relais 10 wird stets lastfrei geschaltet.
Zur sicheren Erkennung der Einschaltung des Motorbetriebes führt eine Leitung 12 von der Steuerelektronik 9 zum Motorbetriebskontakt a des ersten Umschaltgliedes S1. Wird der Motorbetrieb eingeschaltet, so liegt eine Spannung am Motorbetriebskontakt a an, die das Motorbetriebsprogramm der Steuerelektronik 9 aktiviert.

Zur Drehzahlstellung des Stromwendermotors und der Erkennung des Motorstillstandes kann dem Anker eine entsprechende Einrichtung zur Drehzahlerfassung zugeordnet sein. Die Drehzahlerfassungseinrichtung 13 steht mit der Steuerelektronik in Verbindung, und sie kommt sowohl während des Motorbetriebes als auch während des Bremsbetriebes zur Anwendung.

Damit nach einem Versagen der Bremselektronik das Netz sich nicht über den Motor kurzschließen kann und der Motor nicht abrupt abbremst, ist während des Bremsbetriebes eine Sicherung 14 mit dem Motor in Reihe geschaltet.

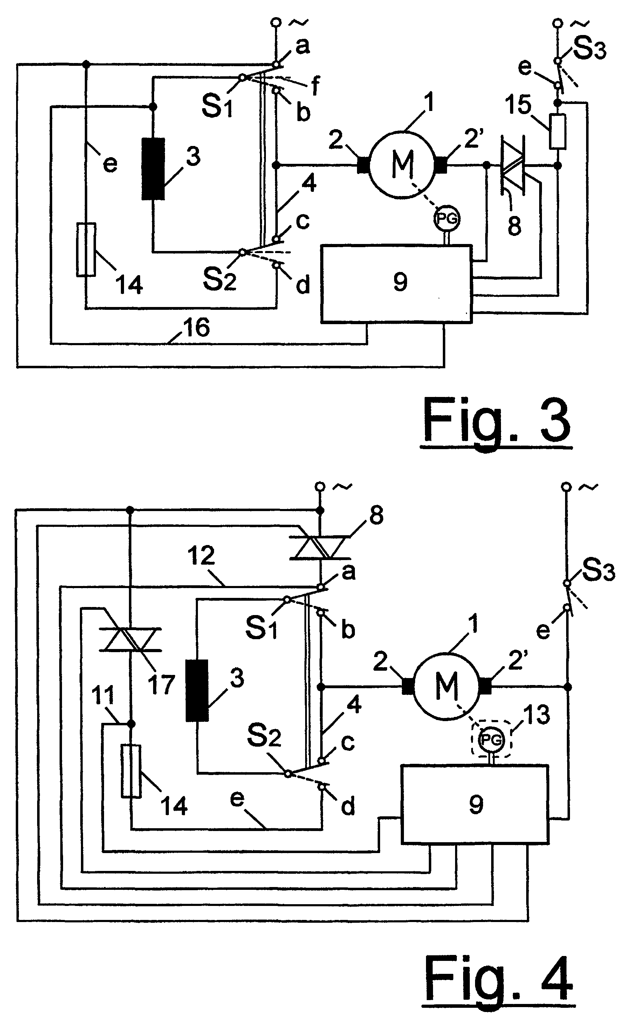

Fig. 3 zeigt eine Schaltungsanordnung, bei der auch sowohl der Motorbetrieb als auch der Bremsbetrieb über den Triac 8 erfolgt. Zur sicheren Erkennung der Einleitung des Bremsbetriebes ist der Umschalter derart ausgelegt, daß die Umschaltglieder S1 und S2 während des Umschaltens vom Motorbetrieb in den Bremsbetrieb auf dem halben Weg kurzzeitig verharren, hierdurch wird der Stromfluß über den Triac 8 für die Zeit des Verharrens der Schaltglieder in der Mittelstellung f unterbrochen. Dieser Zustand kann von der Steuerelektronik 9 über einen Shunt 15 erfaßt werden, wodurch das Motorbetriebsprogramm beendet und das Bremsbetriebsprogramm aktiviert wird. Damit von der Steuerelektronik 9 sicher erkannt wird, wann der Motorbetriebszustand oder der Bremsbetriebszustand geschaltet ist, führt eine Leitung 16 von der Steuerelektronik 9 zum ersten Umschaltglied S1. Für den Bremsbetrieb ist der Umschalter so verschaltet, daß der Bremsbetriebskontakt d des zweiten Umschaltgliedes S2 über die Brücke e mit dem Motorbetriebskontakt a des ersten Umschaltgliedes S1 verbunden ist.

Fig. 4 zeigt eine Schaltungsanordnung, bei der über den ersten Triac 8 nur der Motorbetrieb und über einen zweiten Triac 17 nur der Bremsbetrieb erfolgt. Der erste und der zweite Triac 8;17 ist jeweils mit dem einen Triacanschluß an dem zu dem Motorbetriebskontakt a des ersten Umschaltgliedes S1 führenden Netzanschluß angeschlossen, wobei der andere Triacanschluß des ersten Triacs 8 am Motorbetriebskontakt a des ersten Umschaltgliedes S1 angeschlossen ist, und der andere Triacanschluß des zweiten Triacs 17 ist am Bremsbetriebskontakt d des zweiten Umschaltgliedes S2 angeschlossen. Die Erkennung des Motorbetriebes und des Bremsbetriebes, sowie das Programm für den Motorbetrieb und den Bremsbetrieb entspricht der Beschreibung der Fig. 2.

Die Ansteuerung des Triacs 8;17 während des Bremsbetriebes durch die Steuerelektronik 9 der Fig. 2,3,4 entspricht dem Ansteuerverfahren der Fig. 1. Nach Beendigung des Bremsvorganges wird auch hier der Stromfluß über den Stromwendermotor durch die Triacs 8;17 gesperrt und danach der Motor durch das Netztrennglied S3 oder einem Relais 10 vom Netz getrennt.

Mit der Steuerelektronik 9 kann auch eine Temperaturüberwachung des Motors, eine Drehzahlkonstantregelung, ein Wiederanlaufstop und eine Bremszeitüberwachung sowie ein Überlaststop durchgeführt werden.

Die Figuren zeigen jeweils eine Schaltungsanordnung für Wechselstrombetrieb. Die Schaltungsanordnungen können auch für Gleichstrombetrieb ausgelegt sein, indem der Triac durch einen Transistor ersetzt und die Steuerelektronik des Triacs als Pulsweitenmodulator ausgelegt ist. Die Verschaltung und die Wirkungsweise der Schaltungsanordnungen ist bei Gleichstrombetrieb die gleiche wie bei Wechselstrombetrieb.

## Patentansprüche

1. Netzbremseinrichtung für ein Elektrohandwerkzeug mit einem Stromwendermotor (1) und einer Schaltungsanordnung mit einem zwischen Motor- und Bremsbetrieb umschaltenden zweipoligen Umschalter mit einem ersten und einem zweiten Umschaltglied (S1;S2) zur Umpolung der Feld- oder Ankerwicklung und mit einem Triac (8), der in Reihe mit dem Stromwendermotor (1) geschaltet ist, und mit einer dem Triac (8) zugeordneten Steuerelektronik (9),
**dadurch gekennzeichnet, daß** zur sicheren Einleitung des Netzbremsvorganges die Steuerelektronik (9) derart ausgelegt ist, daß sowohl die Motorbetriebsschaltstellung als auch die Netzbremsbetriebsschaltstellung des zweipoligen Umschalters von der Steuerelektronik (9) sicher erkennbar ist, wobei hierfür eine Leitung (12) von der Steuerelektronik (9) zum Anschluß des Motorbetriebskontakts (a) des ersten Umschaltgliedes (S1) und eine Leitung (11) von der Steuerelektronik (9) zum Bremsbetriebskontakt (d) des zweiten Umschaltgliedes (S2) zur Ermittlung einer Netzspannung an diese Kontakte führen, wobei eine anliegende Netzspannung am Motorbetriebskontakt (a) des ersten Umschaltgliedes (S1) der Motorbetrieb über die Steuerelektronik (9) aktiviert ist, und eine anliegende Netzspannung am Bremsbetriebskontakt (d) des zweiten Umschaltgliedes (S2) der Netzbremsbetrieb über die Steuerelektronik (9) aktiviert ist.

2. Netzbremseinrichtung nach Anspruch 1,
**dadurch gekennzeichnet, daß** für den Netzbremsbetrieb eine Brücke (e) zwischen dem Bremsbetriebskontakt (d) des zweiten Umschaltgliedes (S2) und dem zum Motorbetriebskontakt (a) des ersten Umschaltgliedes (S1) führenden Netzanschluß geschaltet ist, wobei in dieser Brücke (e) ein Triac (5;17) oder ein Relais (10) angeordnet sein kann.

3. Netzbremseinrichtung nach Anspruch 1 und 2,
**dadurch gekennzeichnet, daß** zur Erkennung des Umschaltens vom Motorbetrieb in den Bremsbetrieb der Umschalter derart ausgelegt ist, daß die Umschaltglieder (S1;S2) während des Umschaltens vom Motorbetrieb in den Bremsbetrieb auf dem halben Weg (f) kurzzeitig verharren, und der hierdurch erzielte spannungslose Zustand am Umschaltglied (S1) wird von der Steuerelektronik (9) über eine Leitung (16) erfaßt, wodurch das Motorbetriebsprogramm beendet und das Bremsbetriebsprogramm aktiviert ist.

4. Netzbremseinrichtung nach Anspruch 1 und 2,
**dadurch gekennzeichnet, daß** über den ersten Triac (8) der Motorbetrieb und über einen zweiten Triac (17) der Bremsbetrieb erfolgt, wobei der erste und der zweite Triac (8:17) jeweils mit dem einen Triacanschluß an dem zu dem Motorbetriebskontakt (a) des ersten Umschaltgliedes (S1) führenden Netzanschluß angeschlossen ist, und der andere Triacanschluß des ersten Triacs (8) am Motorbetriebskontakt (a) des ersten Umschaltgliedes (S1) angeschlossen ist, und der andere Triacanschluß des zweiten Triacs (17) am Bremsbetriebskontakt (d) des zweiten Umschaltgliedes (S2) angeschlossen ist.

5. Netzbremseinrichtung für ein Elektrohandwerkzeug mit einem Stromwendermotor (1) und einer Schaltungsanordnung mit einem zwischen Motor- und Bremsbetrieb umschaltenden zweipoligen Umschalter mit einem ersten und einem zweiten Umschaltglied (S1;S2) zur Umpolung der Feld- oder Ankerwicklung und mit einem Triac (5), der in Reihe mit dem Stromwendermotor (1) schaltbar ist, und mit einer dem Triac (5) zugeordneten Steuerelektronik (6),
**dadurch gekennzeichnet, daß** zur sicheren Einleitung des Netzbremsvorganges die Steuerelektronik (6) derart ausgelegt ist, daß sowohl die Motorbetriebsschaltstellung als auch die Netzbremsbetriebsschaltstellung des zweipoligen Umschalters von der Steuerelektronik (6) sicher erkennbar ist, wobei hierfür eine Leitung (11) von der Steuerelektronik (6) zum Bremsbetriebskontakt (d) des zweiten Umschaltgliedes (S2) zur Ermittlung einer Netzspannung an diesem Kontakt führt, wobei eine anliegende Netzspannung am Bremsbetriebskontakt (d) des zweiten Umschaltgliedes (S2) der Netzbremsbetrieb über die Steuerelektronik (6) aktiviert ist.

6. Netzbremseinrichtung nach Anspruch 1 bis 5,
**dadurch gekennzeichnet, daß** dem Stromwendermotor des Elektrohandwerkzeugs eine Einrichtung (13) zur Drehzahlerfassung zugeordnet ist, die mit der Steuerelektronik (6;9) in Verbindung steht, wobei die Einrichtung zur Drehzahlerfassung sowohl während des Motorbetriebes als auch während des Bremsbetriebes und zur Erkennung des Motorstillstandes Anwendung findet.

7. Netzbremseinrichtung nach Anspruch 1 bis 6,
**dadurch gekennzeichnet, daß** der Triac (5;8;17) während des Bremsbetriebes so angesteuert wird, daß am Anfang des Bremsbetriebes die Halbwellen einen hohen Anschnitt aufweisen, und im weiteren Verlauf des Bremsbetriebes der Anschnitt der Halbwellen in Abhängigkeit vom geringsten zu erzielenden Bürstenfeuer kontinuierlich bis zum Ende des Bremsvorganges abnimmt, so daß der Bremsstrom am Anfang gering ist, dann ansteigt und über eine gewisse Zeit konstant bleibt und zum Ende der Bremszeit weiter ansteigt.

8. Netzbremseinrichtung nach Anspruch 1 bis 7,
**dadurch gekennzeichnet, daß** während des Bremsbetriebes eine Sicherung (14) mit dem Motor in Reihe geschaltet ist.

9. Netzbremseinrichtung nach Anspruch 1 bis 8,
**dadurch gekennzeichnet, daß** ein Netztrennglied (S3) die Netztrennung während des Bremsverlaufs solange verzögert bis der Motor zum Stillstand gekommen ist, wobei das Netztrennglied (S3) über eine mechanische Einrichtung bzw. über eine elektronische Einrichtung verzögert schaltet, oder. die Netztrennung erfolgt über ein Relais (10), das in der dem Bremsbetriebskontakt (d) des zweiten Umschaltgliedes (S2) mit dem Motorbetriebskontakt (a) des ersten Umschaltgliedes (S1) verbindenden Brücke (e) angeordnet ist, wobei das Relais (10) mittels der Steuerelektronik (6:9) stets lastfrei geschaltet wird.

10. Netzbremseinrichtung nach Anspruch 1 bis 9,
**dadurch gekennzeichnet, daß** die Schaltungsanordnung und die Steuerelektronik (6;9) anstatt für Wechselstrombetrieb für Gleichstrombetrieb ausgelegt ist, und der Triac durch einen Transistor ersetzt ist und die Steuerelektronik einen Pulsweitenmodulator beinhaltet.

## Claims

1. A dynamic braking device for an electric hand tool having a commutator motor (1) and a circuit arrangement having a double-pole change-over switch switching between motor mode and braking mode and having a first and a second change-over contact element (S1; S2) for reversing the polarity of the field or armature winding, and having a triac (8), which is connected in series to the commutator motor (1), and having control electronics (9) associated with the triac (8),
**characterised in that,** for the reliable initiation of the dynamic braking procedure, the control electronics (9) are designed such that both the motor-mode position and the dynamic-braking-mode position of the double-pole change-over switch can be reliably recognised by the control electronics (9), for which a line (12) leads from the control electronics (9) to the connection of the motor-mode contact (a) of the first change-over contact element (S1), and a line (11) leads from the control electronics (9) to the braking-mode contact (d) of the second change-over contact element (S2) for the purpose of determining a supply voltage at these contacts, the motor operation being activated by way of the control electronics (9) an applied supply voltage at the motor-mode contact (a) of the first change-over contact element (S1), and the dynamic braking operation being activated by way of the control electronics (9) an applied supply voltage at the braking-mode contact (d) of the second change-over contact element (S2).

2. A dynamic braking device according to Claim 1,
**characterised in that**, for the dynamic braking operation, a bridge (e) is connected between the braking-mode contact (d) of the second change-over contact element (S2) and the supply connection leading to the motor-mode contact (a) of the first change-over contact element (S1), it being possible to arrange a triac (5; 17) or a relay (10) in this bridge (e).

3. A dynamic braking device according to Claims 1 and 2,
**characterised in that**, to recognise the change-over from motor mode to braking mode, the change-over switch is designed such that the change-over contact elements (S1; S2) pause temporarily halfway (f) through the change-over from motor mode to braking mode, and the resulting loss of voltage at the change-over contact element (S1) is recognised by the control electronics (9) by way of a line (16), as a result of which the motor-mode program is terminated and the braking-mode program is activated.

4. A dynamic braking device according to Claims 1 and 2,
**characterised in that** the motor operation is effected by way of the first triac (8), and the braking operation is effected by way of a second triac (17), the first and the second triac (8; 17) each being connected to the one triac connection at the supply connection leading to the motor-mode contact (a) of the first change-over contact element (S1), and the other triac connection of the first triac (8) being connected to the motor-mode contact (a) of the first change-over contact element (S1), and the other triac connection of the second triac (17) being connected to the braking-mode contact (d) of the second change-over contact element (S2).

5. A dynamic braking device for an electric hand tool having a commutator motor (1) and a circuit arrangement having a double-pole change-over switch switching between motor mode and braking mode and having a first and a second change-over contact element (S1; S2) for reversing the polarity of the field or armature winding, and having a triac (5), which may be connected in series to the commutator motor (1), and having control electronics (6) associated with the triac (5),
**characterised in that**, for the reliable initiation of the dynamic braking procedure, the control electronics (6) are designed such that both the motor-mode position and the dynamic-braking-mode position of the double-pole change-over switch can be reliably recognised by the control electronics (6), for which a line (11) leads from the control electronics (6) to the braking-mode contact (d) of the second change-over contact element (S2) for the purpose of determining a supply voltage at this contact, the dynamic braking operation being activated by way of the control electronics (6) an applied supply voltage at the braking-mode contact (d) of the second change-over contact element (S2).

6. A dynamic braking device according to Claims 1 to 5,
**characterised in that** a speed-detecting device (13), which is in communication with the control electronics (6, 9), is associated with the commutator motor of the electronic hand tool, said device being used to measure the speed both during the motor operation and during the braking operation and to recognise when the motor is at a standstill.

7. A dynamic braking device according to Claims 1 to 6,
**characterised in that** the triac (5; 8; 17) is controlled during the braking operation such that, at the start of the braking operation, the half-waves have a steep slope, and in the further course of the braking operation, the slope of the half-waves decreases continuously to the end of the braking procedure in accordance with the minimum degree of commutator sparking to achieved, so that the initial braking current is low, then increases and remains constant over a certain time-period, and increases further towards the end of the braking period.

8. A dynamic braking device according to Claims 1 to 7,
**characterised in that** a fuse (14) is connected in series to the motor during the braking operation.

9. A dynamic braking device according to Claims 1 to 8,
**characterised in that** a supply-disconnecting contact element (S3) delays disconnection of the supply during braking until the motor has come to a standstill, the supply-disconnecting contact element (S3) being connected with a time delay by way of a mechanical device or by way of an electronic device, or the disconnection of the supply being effected by way of a relay (10), which is arranged in the bridge (e) connecting the braking-mode contact (d) of the second change-over contact element (S2) to the motor-mode contact (a) of the first change-over contact element (S1), the relay (10) always being connected in load-free manner by means of the control electronics (6; 9).

10. A dynamic braking device according to Claims 1 to 9,
**characterised in that** the circuit arrangement and the control electronics (6; 9) are designed for a d.c. operation instead of an a.c. operation, and the triac is replaced by a transistor and the control electronics contain a pulse-width modulator.

## Revendications

1. Dispositif de freinage sur secteur pour outil électrique avec un moteur à collecteur (1) et un circuit comprenant un commutateur bipolaire commutant entre un mode moteur et un mode freinage, avec un premier et un second élément de commutation (S1 ; S2) pour inverser la polarisation du bobinage de l'inducteur ou de celui de l'induit, avec un triac (8) monté en série avec le moteur à collecteur (1) et avec un dispositif de commande électronique (9) associé au triac (8),
**caractérisé en ce que**, pour lancer en toute fiabilité le processus de freinage sur secteur, le dispositif de commande électronique (9) est conçu de manière à pouvoir détecter avec fiabilité quand le commutateur bipolaire est en position de commutation mode moteur et quand il est en position de commutation mode freinage, étant précisé qu'il est prévu à cet effet une connexion (12) entre le dispositif de commande électronique (9) et le raccordement du contact associé au mode moteur (a) du premier élément de commutation (S1), ainsi qu'une connexion (11) entre le dispositif de commande électronique (9) et le contact associé au mode freinage (d) du second élément de commutation (S2) pour détecter une tension du secteur au niveau de ces contacts, une tension du secteur appliquée au contact associé au mode moteur (a) du premier élément de commutation (S1) associé au mode moteur étant activée par l'intermédiaire du dispositif de commande électronique (9) et une tension du secteur appliquée au contact associé au mode freinage (d) du second élément de commutation (S2) associé au mode freinage sur secteur étant activée par l'intermédiaire du dispositif de commande électronique (9).

2. Dispositif de freinage sur secteur selon la revendication 1,
**caractérisé en ce que**, pour le mode freinage sur secteur, il est prévu un pont (e) monté entre le contact associé au mode freinage (d) du second élément de commutation (S2) et la liaison au secteur menant au contact associé au mode moteur (a) du premier élément de commutation (S1), ledit pont (e) pouvant comporter un triac (5 ; 17) ou un relais (10).

3. Dispositif de freinage sur secteur selon les revendications 1 et 2,
**caractérisé en ce que**, pour détecter la commutation de mode moteur en mode freinage, le commutateur est conçu de telle sorte que les éléments de commutation (S1 ; S2) restent brièvement à mi-course (f) lors de la commutation de mode moteur en mode freinage, et **en ce que** l'état sans tension qui en résulte au niveau de l'élément de commutation (S1) est détecté par le dispositif de commande électronique (9) par l'intermédiaire d'une connexion (16), mettant fin au programme de fonctionnement en mode moteur et activant le programme de fonctionnement en mode freinage.

4. Dispositif de freinage sur secteur selon les revendications 1 et 2,
**caractérisé en ce que** le fonctionnement en mode moteur est déclenché par l'intermédiaire du premier triac (8) et le fonctionnement en mode freinage par l'intermédiaire d'un second triac (8 ; 17), le premier et le second triac (8 ; 17) étant tous deux connectés, au niveau d'un de leurs raccordements, à la liaison au secteur menant au contact associé au mode moteur (a) du premier élément de commutation (S1), l'autre raccordement du premier triac (8) étant relié au contact associé au mode moteur (a) du premier élément de commutation (S1), et l'autre raccordement du second triac (17) étant relié au contact associé au mode freinage (d) du second élément de commutation (S2).

5. Dispositif de freinage sur secteur pour outil électrique avec un moteur à collecteur (1) et un circuit comprenant un commutateur bipolaire commutant entre un mode moteur et un mode freinage, avec un premier et un second élément de commutation (S1 ; S2) pour inverser la polarisation du bobinage de l'inducteur ou de celui de l'induit, avec un triac (5) apte à être monté en série avec le moteur à collecteur (1) et avec un dispositif de commande électronique (6) associé au triac (5),
**caractérisé en ce que**, pour lancer en toute fiabilité le processus de freinage sur secteur, le dispositif de commande électronique (6) est conçu de manière à pouvoir détecter avec fiabilité quand le commutateur bipolaire est en position de commutation mode moteur et quand il est en position de commutation mode freinage, étant précisé qu'il est prévu à cet effet une connexion (11) entre le dispositif de commande électronique (6) et le contact associé au mode freinage (d) du second élément de commutation (S2) pour détecter une tension du secteur au niveau de ce contact, une tension du secteur appliquée au contact associé au mode freinage (d) du second élément de commutation (S2) associé au mode freinage sur secteur étant activée par l'intermédiaire du dispositif de commande électronique (6).

6. Dispositif de freinage sur secteur selon les revendications 1 à 5,
**caractérisé en ce qu'**au moteur à collecteur de l'outil électrique est associé un compte-tours (13) raccordé au dispositif de commande électronique (6 ; 9), ledit compte-tours servant à la fois pendant le mode moteur, pendant le mode freinage et pour détecter l'arrêt du moteur.

7. Dispositif de freinage sur secteur selon les revendications 1 à 6,
**caractérisé en ce qu'**en mode freinage, le triac (5 ; 8 ; 17) est commandé de manière à ce qu'au début du fonctionnement en mode freinage, les demi-ondes présentent une grande attaque et **en ce que**, par la suite, l'attaque des demi-ondes décroisse en continu jusqu'à la fin de l'opération de freinage en considération du plus faible crachement aux balais réalisable, de sorte que le courant de freinage est initialement faible, puis augmente et reste constant un certain temps avant de réaugmenter à la fin du temps de freinage.

8. Dispositif de freinage sur secteur selon les revendications 1 à 7,
**caractérisé en ce que**, pour le fonctionnement en mode freinage, un fusible (14) est monté en série avec le moteur.

9. Dispositif de freinage sur secteur selon les revendications 1 à 8,
**caractérisé en ce qu'**un élément de sectionnement du secteur (S3) temporise le sectionnement du secteur pendant l'opération de freinage jusqu'à ce que le moteur soit à l'arrêt, l'élément de sectionnement du secteur (S3) commutant de manière temporisée par l'intermédiaire d'un dispositif mécanique ou d'un dispositif électronique, ou le sectionnement du secteur s'effectuant par l'intermédiaire d'un relais (10) monté dans le pont (e) reliant le contact associé au mode freinage (d) du second élément de commutation (S2) au contact associé au mode moteur (a) du premier élément de commutation (S1), le relais (10) étant toujours commuté à vide au moyen du dispositif de commande électronique (6 ; 9).

10. Dispositif de freinage sur secteur selon les revendications 1 à 9,
**caractérisé en ce que** le circuit et le dispositif de commande électronique (6 ; 9) sont conçus non plus pour un fonctionnement en courant alternatif mais pour un fonctionnement en courant continu, **en ce que** le triac est remplacé par un transistor et **en ce que** le dispositif de commande électronique comporte un modulateur d'impulsions en largeur.
